# NEW EUROPEAN PATENT SPECIFICATION

(11) **EP 0 121 983 B2**
(45) Date of publication and mention of the opposition decision: **03.01.1996**
(45) Mention of the grant of the patent: 28.06.1989
(21) Application number: 84300743.6
(22) Date of filing: 07.02.1984
(51) Int. Cl.: C08G 69/26

(54) **Polyamide compositions from mixtures of trimethylhexamethylene diamine, hexamethylene diamine and diacids**
Polyamid-Zusammensetzungen aus Mischungen von Trimethylhexamethylendiamin, Hexamethylendiamin und Dicarbonsäuren
Polyamide à base de mélanges de triméthylhexaméthylène diamine, d'hexaméthylène diamine et de diacides

(30) Priority: 16.02.1983 US 466898
(43) Date of publication of application: 17.10.1984
(73) Proprietor: AMOCO CORPORATION, Chicago Illinois 60601 (US)
(72) Inventor: Poppe, Wassily, Lombard Illinois 60148 (US); Chen, Yu-Tsai, Glen Ellyn Illinois 60137 (US)
(74) Representative: Ritter, Stephen David

(56) References cited:
- DE-A- 2 651 534
- DE-B- 1 805 921
- FR-A- 2 331 633
- FR-A- 2 371 474
- US-A- 3 516 972
- US-A- 3 846 379
- US-A- 4 022 756
- Polymer, Vol.17, 1976, p.875-892

## Description

BACKGROUND OF THE INVENTION Field of the Invention The field of this invention relates to crystalline copolyamides from mixtures of hexamethylene diamine (HMDA) and trimethylhexamethylene diamine (TMHMDA) and mixtures of terephthalic acid (TA), adipic acid (AA) and, optionally, isophthalic acid (IA).

Filled compositions from HMDA, TMHMDA and TA, IA, and AA having heat deflection temperatures of 240 to 305°C are unknown in the prior art. Likewise, processes for making crystalline copolyamides from HMDA, TMHMDA and the aforementioned diacids giving polymers of injection moldable quality have not been contemplated in the prior art.

References of interest include: U.S. Patent 3,553,288, which discloses polyester blends, some components of which can be TA, IA or AA; and U.S. Patent 4,218,509, which discloses various fibers. Transparent terpolyamides from TA, IA, AA and HMDA moieties are disclosed in GB-A-1210592, German Offenlegungsschrift 2,651,534 discloses fiber-forming random terpolyamides including TA and IA and very small amounts of AA with HMDA. JP-B-71018809, JP-B-52085516 and JP-B-71028218 disclose fibers from TA, IA, AA and HMDA polyamides.

FR-A-2331633 discloses the production of fiber-forming polyamides from HMDA, TA, IA and possibly AA. There is no suggestion, however, of the incorporation of TMHMDA into the polymer but this patent does indicate that if less than 30 mole percent of IA is used, it is difficult to shape fibers from the resulting polymer due to its high melting point.

US-A-3516972 discloses the formation of dodecamethylene diamine based polyamides using TA, IA and AA as diacid components. The use of HMDA and TMHMDA in combination with TA and/or IA and AA is not disclosed.

The use of TMHMDA in the production of copolyamides is disclosed in FR-A-2371474 but only in the context of preparing transparent or amorphous copolyamides based on IA and HMDA. Its purpose of incorporating TMHMDA is indicated to be to increase the second transition temperature.

Fiber forming copolyamides with a TA:IA ratio of up to 80:20 are disclosed in US-A-4022756 but this patent teaches that a high TA-containing copolymer is not useful due to "phase out" which can occur at TA levels greater than 60 mole percent.

In reviewing all these references, it is clear that crystalline copolyamides manufactured from HMDA, TMHMDA and mixtures of TA, AA and, optionally, IA including filled compositions of these polymers having heat deflection temperatures of 240 to 305°C have not been contemplated in the prior art.

The general object of this invention is to provide novel polyamides derived from HMDA, TMHMDA and mixtures of TA, AA and, optionally, IA and to provide molding compositions reinforced with glass fibers, glass beads, minerals or a mixture thereof made from said polyamides. Other objects include a process for the manufacture of the crystalline polyamide.

According to the present invention there is provided a crystalline polyamide copolymer consisting essentially of the following recurrent units A and C and, optionally, unit B: 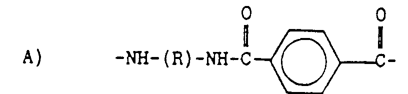 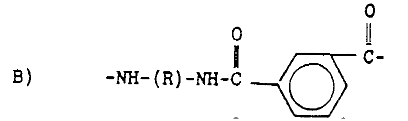 and 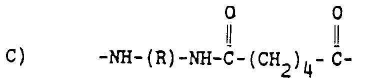 wherein R is a mixture of a straight chain aliphatic hydrocarbon radical consisting of six carbon atoms and an alkyl substituted saturated hydrocarbyl chain, six carbon atoms in length, in which the alkyl substitution comprises three methyl groups with two of the three methyl groups on the same carbon atom wherein the mole ratio of the straight chain aliphatic hydrocarbon radical to the alkyl substituted saturated hydrocarbon radical is 55/45 to 95/5 and wherein the molar proportions of A, B and C units are as follows: ≥61% A-units; ≤25% B-units and ≤5% C-units.

In a preferred formulation the ratio of A:B:C is 65:25:10 to 85:10:5.

The crystalline polyamides, when filled and molded with glass fibers, glass beads, minerals or a mixture thereof, have a heat deflection temperature of 240 to 305°C, as determined by ASTM Method D648. This is an unusual feature and completely unexpected in the prior art since comparable polyamides have much lower heat deflection temperatures. The importance of having high heat deflection temperatures is that they enable the injection molded copolyamides to be used in applications such as the hood of an automobile, shroud for a lawn mower, chain saw guard, and in electrical connector applications. In addition to the high heat deflection temperature, the tensile strength of these copolyamides generally is 20,000 to 40,000 psi (138-276 MPa) which is as high or higher than that of die cast aluminum or zinc while the specific gravity of our copolyamides is about one-half of that of aluminum or zinc. Thus, these copolyamides are particularly useful in transportation equipment applications. These filled copolyamides generally also have a flexural modulus 1 million to 3 million psi (6894-20682 MPa) as determined by ASTM Method D790. This property is advantageous in applications requiring dimensional stability. The molecular weight of the copolyamides preferably is 5,000 to 30,000.

Our copolyamide composition can be filled with 10 to 60 weight percent glass fibers, glass beads, minerals (e.g. mineral fibers), or graphite fibers or a mixture thereof. Advantageously, the molding composition may contain from 20 to 50 weight percent of glass fibers, glass beads, minerals, or a mixture thereof, or graphite fibers. Our studies have shown that high heat deflection temperatures are characterized by substituting for part of the polymer, 20 to 50 weight percent thereof with glass fibers, glass beads, minerals, or graphite fibers. These glass filled polyamides and copolyamides are much more economical than molding compositions prepared without the use of the glass fibers, glass beads, minerals, or graphite fillers. The use of polyimides and amides as engineering plastics has been limited only by their relatively high cost. Thus, when our invention is employed, through which the inherent cost can be brought down, the commercial application of polyamides requiring very high flexural strength can be greatly expanded. We have prepared monofilaments (e.g. fibers) and laminates using our novel polyamides. The process starts with a single screw extruder to supply a melt for conversion to fiber. The die for monofilament is similar to the multifilament die. The monofilament process is a slower operation, typically 50 to 200 feet/minute (15-60 m/minute). For the melt spinning operations 40 to 80 feet/minute (12-24 m/minute) was the speed used for the monofilament processing. The monofilament, on the other hand, is water quenched with much less melt draw down. The monofilament is subsequently drawn with heated drawing systems. The monofilament drawing is done in-line using heated ovens.

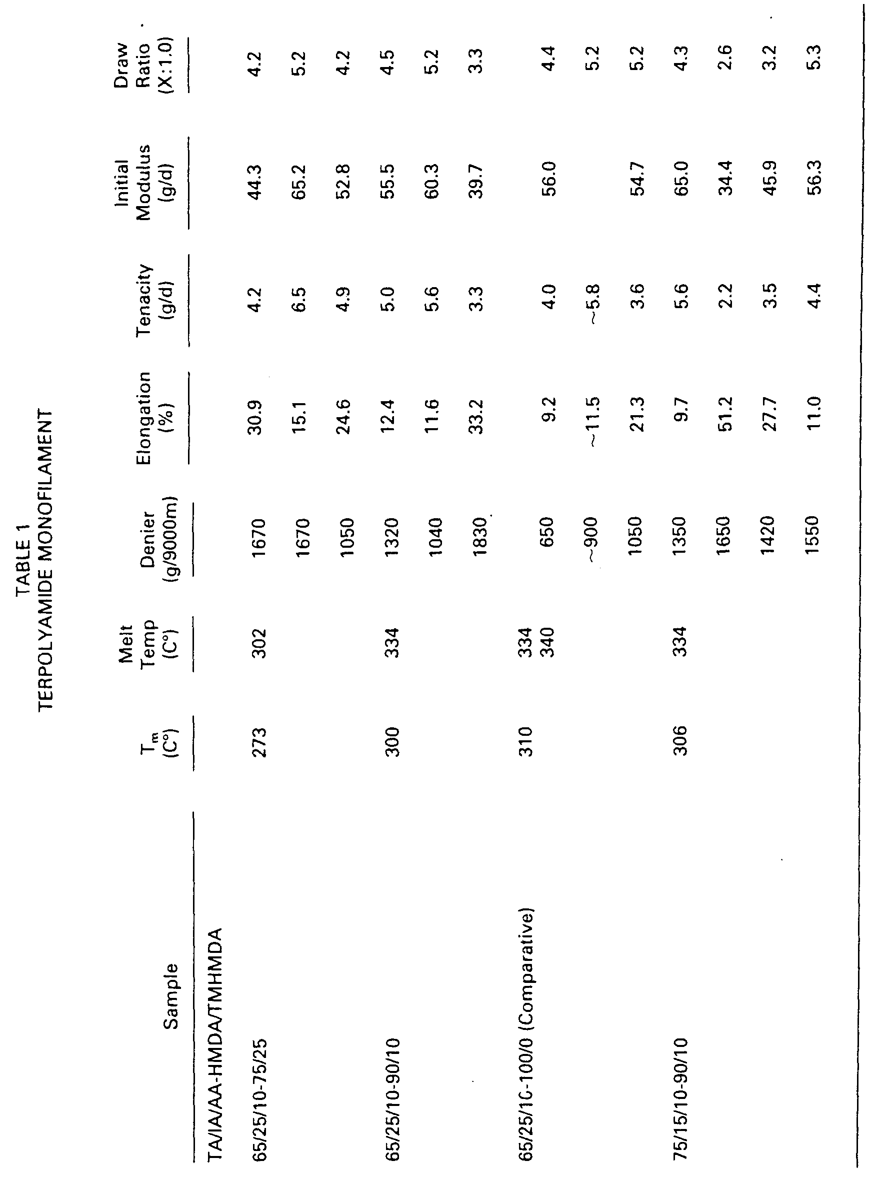

Suitably, in our process for the manufacture of copolyamides, the reaction temperature is kept in the range of 260 to 315°C. The mixtures of TA, AA and, optionally, IA may be reacted with the mixture of HMDA and TMHMDA without the addition of any external solvent. The reactant melt temperature in our process preferably is kept in the range of 250 to 270°C. In the preferred process, the reaction is conducted in a Helicone® reactor, preheated to a temperature of 90 to 150°C. In our process for the manufacture of polyamides, about equal molar amounts of the mixture of HMDA and TMHMDA are reacted with the TA, IA and AA mixture or the TA, AA mixture.

The preferred diamines for our novel compositions are hexamethylene diamine, 2,2,4-trimethylhexamethylene diamine, 2,4,4-trimethylhexamethylene diamine, or mixtures of these. The injection molding of our copolyamides may be accomplished by injecting the copolyamide into a mold maintained at a temperature of 100 to 200°C. In this process, a 20-second to 1-minute cycle may be used with a barrel temperature of 320 to 350°C. These temperatures will vary depending on the Tg and Tm of the polyamide being molded. These copolyamides have excellent heat deflection temperature and other physical properties.

With the addition of reinforcing materials, particularly the physical properties such as flexural strength are improved if the copolyamides contain from 10 to 60 percent by weight glass fibers, glass beads, minerals (such as mineral fibers) or mixtures thereof. In the preferred range, the copolyamides contain 20 to 50 percent by weight of glass fibers, glass beads, or graphite, or mixtures thereof. Suitably, the reinforcing materials can be glass fibers, glass beads, glass spheres, or glass fabrics. The preferred fillers are glass fibers. These are made of alkali-free, boron-silicate glass or alkali-containing C-glass. Suitably, the thickness of the fibers is, on the average, between 3 µm and 30 µm. It is possible to use long fibers in the range of from 5 to 50 mm and also short fibers with each filament length of 0.05 to 5 mm. In principle, any standard commercial grade fiber, especially glass fibers, may be used. Glass fibers ranging from 5µm to 50µm in diameter may also be used as a reinforcing material.

The reinforcing polyamide polymers may be prepared in various ways. Suitably, so-called roving endless glass fiber strands are coated with the polyamide melt and subsequently granulated. Advantageously, the cut fibers and glass beads may also be mixed with granulated polyamide and the resulting mixture melted in a conventional extruder, or alternatively, the fibers may be introduced into the melted polyamide through a suitable inlet in the extruder. The injection molding conditions are given in Table 2 below.

**TABLE 2**

| | |
|---|---|
| Mold Temperature | 100 to 200°C |
| Injection Pressure | 7,000 to 16,000 psi (48-110 MPa) and held for 10 to 40 seconds |
| Back Pressure | 100 to 1,000 psi (689-6890 KPa) |
| Cycle Time | 20 to 60 seconds |
| Extruder: Nozzle Temperature | 330 to 360°C |
| Barrels: Front Heated to | 320 to 350°C |
| Screw: | 20 to 60 revolutions/minute |

Our process utilizes four major units. These are the salt reactor, the surge and aging vessel, the first polycondensation reactor, and the twin-screw finishing reactor. Steam, advantageously, is used for pressure control on the first three stages. Steam use is helpful since we can control the extent of the reaction without worrying about unknown pressure leaks. Steam is also useful to our process since we use no water or low amounts of water in our feed material. When pressure make-up is required, use of nitrogen or other inert gas can cause a reduction in water partial pressure and cause a release of water from the salt. When the operating pressure is greater than the equilibrium steam partial pressure at operating temperatures, it will be advantageous to use an inert gas in addition to steam. In prior art processes, steam comes from the excess water in the feed, but in our novel process the extra water will be generated by the polycondensation reaction.

Feed materials can suitably be introduced into the first stage of our process, the salt reactor, in any of several ways. For example, pre-weighed charges can be fed to the salt reactor via lock hoppers. Another suitable procedure is a slurry feed of the HMDA and diacids. This has the advantage of putting the batch stage into less expensive equipment and reduces negative effects of cyclic operation on the first two stages. Also, it would allow easy analysis of feeds prior to its introduction to the process. Advantageously, the reactants can be charged as a paste via an extruder. Such a feed system could preheat the feed materials and would allow a minimal water level in the feed. The primary limitation of this system is that high temperature analytical equipment must be employed.

The salt reactor advantageously is a stirred tank reactor agitated by downward flowing pitched blade turbines. Impeller speed should be great enough to keep solids suspended until reacted. Pressure capability should be enough to prevent volatilization of the lowest boiling monomer component. Free water levels in the salt reactor can range from 0 percent (anhydrous feed materials) to 25 to 30 percent. This is governed by feeding requirements and by phase equilibrium demands. Small amounts of water provide significant freezing point depression and improve processability of the various high melting salts.

The second vessel preferably is a surge or aging vessel. It is generally at the same pressure and temperature as the salt reactor. It serves two functions. It translates the batch operation of the salt reactor to continuous operation when lock hopper feeding is used. It also allows the salt additional residence time to form fully and stabilize. The second stage also minimizes the possibility that unreacted monomer could pass through to the polycondensation reactor. The surge reactor can be non-agitated, but potential problems with gel justify the use of an agitated reactor.

The third stage of our preferred process is the first polycondensation reactor. This reactor is a continuous stirred tank reactor and has a reduced pressure and an increased temperature over the two prior reactors. This reactor can be agitated by either a pitched blade turbine or a helical anchor. A helical anchor permits higher product viscosities and improved productivity in our final extruder reactor. An important factor in the success with our novel process has been control of melt rheology in the first polycondensation reactor by keeping inherent viscosity low. This concept allows us to minimize gel and polymer build-up problems in the first polycondensation reactor, but it does force more work on the finishing reactor. The balance between the first polycondensation reactor and the extruder will vary for each different resin just as the water level requirements in the feed will vary.

The final stage of the preferred ee final stage of the preferred process is a twin-screw extruder reactor. The twin-screw extruder is an advantageous component in our process as it allows us to easily handle the stiff, high-melting point resins that we manufacture. Other types of finishing reactors such as disk ring reactors, agitated stranding devolatilizers, and thin film evaporators can be utilized. However, some of these may have difficulty in handling the high viscosity of our resins.

Catalysts can suitably be employed in our process. These catalysts include the following compounds: NaH₂PO₄, H₃PO₂, H₃PO₄, H₂SO₄, HCl, Na₃PO₃, NaH₂PO₄. H₂O. The amount of catalyst present can vary from 0.01 to 0.2 weight percent of the total weight of the reactants. The preferred catalyst is sodium hypophosphite.

The following examples illustrate the preferred embodiment of this invention. It will be understood that the examples are for illustrative purposes only and do not purport to be wholly definitive with respect to the conditions or scope of the invention.

### Example 1

### Preparation of Polymer

A 65/35-90/10 TA/AA-HMDA/TMHMDA and a 75/15/10-90/10 TA/IA/AA-HMDA/TMHMDA polymer were prepared as follows. The reactants were loaded into a 4CV Helicone reactor that had been preheated to 200-250°F (93-121°C); the temperature control was set at 605°F (318°C). The agitator was set at maximum, about 35 rpm. After about 15 minutes, the reactor pressure rose to 120 psi (827 kPa), and the melt temperature reached about 425°C (218°C). The reactor pressure was held at 120 psi (827 kPa) for 5 minutes, and then was vented down to 100 psi (689 kPa) in 2 minutes, and was held at 100 psi (689 kPa) for about 18 minutes as the melt temperature rose to 568°F (308°C). The reactor pressure was then vented down to atmospheric pressure over a 2 minute period. The reactor mixture was held under the nitrogen sweep for about 8 minutes and then dumped into water. The total reaction time for this run was about 50 minutes. The inherent viscosity of the resin was determined to be 1.45 dl/g.

### Physical Testing

The two polyamide resins were ground, dried in a vacuum oven overnight, mixed with 45 percent glass fibers, and injection molded into test bars. The material properties were tested under the ASTM standard conditions. The test results are shown in the following table.

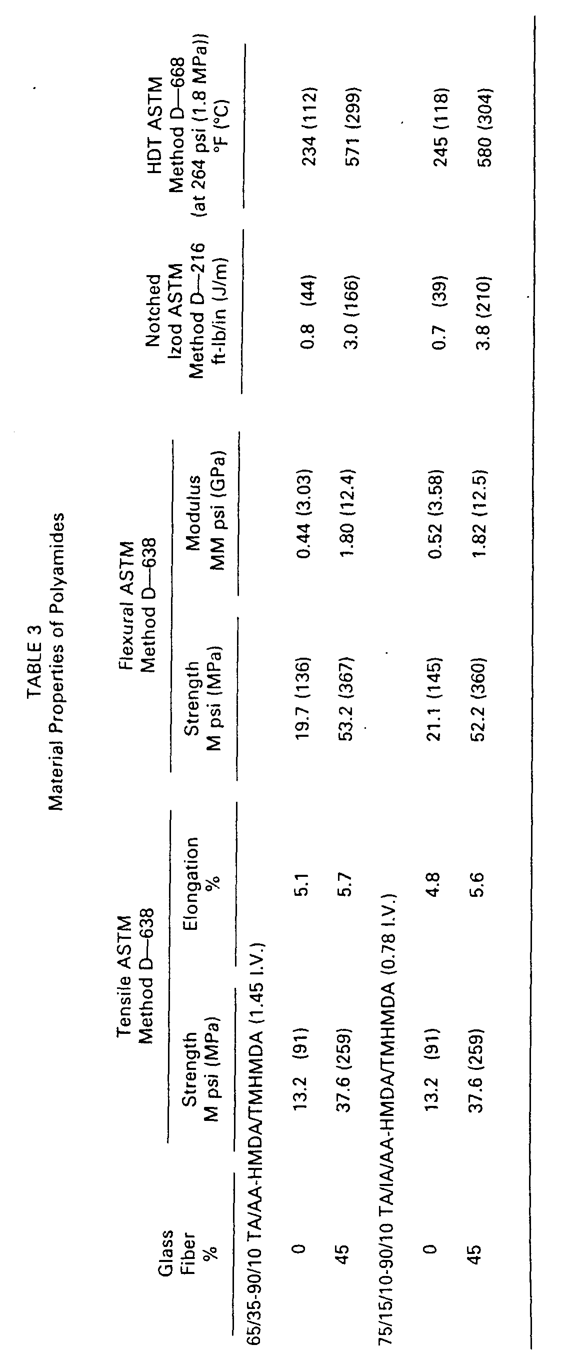

### Example 2 (Comparative)

In general, the 85/15-103^{*} TA/IA-HMDA polyamide is difficult to make and difficult to injection mold, however, when 6% of the HMDA in the formulation is replaced by TMHMDA, the polyamide is easy to produce by melt process and easy to injection mold. The properties of the two polyamides filled with 45% glass fibers are shown in the following table:

**TABLE 4**

| Properties of 45% Glass-Fiber Filled 85/15 Polyamides | | |
|---|---|---|
| | (comparison) | |
| HMDA/TMHMDA | 103/0 | 97/6 |
| Sample Code | Z229U | Z1156 |
| Resin I.V., dl/g | 1.03 | 1.04 |
| Tensile Strength, psi (MPa) | 34,500 (237) | 33,100 (228) |
| Tensile Elongation, % | 4.5 | 4.0 |
| Flexural Strength, psi (MPa) | 49,500 (341) | 50,300 (347) |
| Flexural Modulus, 10⁶ psi (GPa) | 1.97 (13.6) | 1.96 (13.5) |
| Notched Izod, ft-lb/in (J/m) | 3.8 (203) | 3.5 (187) |
| Tensile Impact, ft-lb/in (kJ/m) | 100 | 88 |
| HDT at 264 psi (1.8 MPa) °F | >580 | >580 |
| Water Absorption, % | 0.21 | 0.16 |

^{*} In many experiments, we use an excess of the diamine.

### GENERAL PROCEDURE

The salt is prepared as follows: diacid and diamine monomers are charged to a batch reactor, which has a pitched blade turbine and is of suitable temperature and pressure ratings, to provide a homogeneous salt solution. This is typically 425 to 450°F (218-232°C) and 450 to 550 psig (3.1-3.8 MPa). Additional components incuding water, catalyst, silicone oil, end capping agent, and plasticizer are also introduced in the salt reactor. Water content of the salt can range up to 25% by weight. The preferred range is 13 to 17% by weight.

The salt is metered through a pump and pressure is increased to 1500-5000 psig (10.3-34.5 MPa). The resulting prepolymer then passes through a preheat zone where temperature is raised from about 425 to about 450°F (218-232°C) and then to 550°F to 625°F (288-329°C). The total residence time here is 25 to 50 seconds. The resulting prepolymer is then flashed through a control valve to give an aerosol mist at pressure of 0-400 psig (0-2.7 MPa) and the polymer is then passed through a tubular flash reactor. This reactor is designed to provide a high heat flux to the polymer and has a wall temperature of 650 to 1000°F (343-538°C) to achieve a melt temperature range of 500 to 750°F (260-399°C) through the flash reactor. The total residence time in the reactor is 0.1 to 20 seconds based on feed rate and pressure. (The inherent viscosity (I.V.) is measured in 60/40 phenol/tetrachloroethane at 30°C.)

Conveniently, the polymer is injected directly on the screws of the twin-screw reactor denoted as ZSK in Example 3 to further increase the molecular weight. Example 3 was prepared as described in the General Procedure with specific details hereinbelow:

### Example 3

- Monomers:: 65% hexamethylene diammonium terephthalate 15% hexamethylene diammonium isophthalate 10% hexamethylene diammonium adipate 10% amic acid adduct (TMA, HMDA)
- Water Content:: 15% (by weight)
- Specific Mass Flow:: 141 lb/hr-in (99546 kg/hr/m)
- Residence Time:: Salt reactor 100 minutes Preheat zone 40 seconds Reactor zone 5 seconds (est.)
- Reactor Wall Temp.:: 750°F (399°C) Pressure: 200 psig (1.4 MPa)
- Melt Temp.:: 525°F to 640°F (274-338°C)
- Salt Feed Temp.:: 620°F (327°C)
- Product I.V.:: (Phenol/TCE) Tube: 0.20 dl/g ZSK: 1.01 dl/g

## Claims

1. A crystalline polyamide copolymer consisting essentially of the following recurring units A and C and, optionally, unit B: 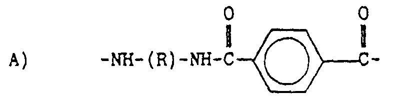 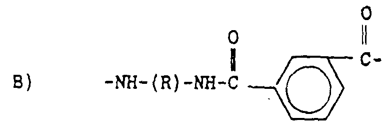 and 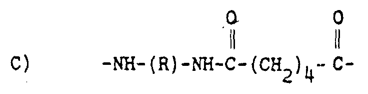 wherein R is a mixture of a straight chain aliphatic hydrocarbon radical consisting of six carbon atoms and an alkyl substituted saturated hydrocarbyl chain, six carbon atoms in length, in which the alkyl substitution comprises three methyl groups with two of the three methyl groups on the same carbon atom wherein the mole ratio of the straight chain aliphatic hydrocarbon radical to the alkyl substituted saturated hydrocarbon radical is 55/45 to 95/5 and wherein the molar proportions of A, B and C units are as follows: ≥61% A-units; ≤25% B-units and ≥5% C-units.

2. A crystalline polyamide copolymer according to Claim 1, consisting substantially of recurring units A and C.

3. A polyamide copolymer according to Claim 1 or 2 wherein the mole ratio of the straight chain aliphatic hydrocarbon radical to the alkyl substituted saturated hydrocarbon radical is 55/45 to 80/20.

4. A polyamide copolymer according to any of Claims 1 to 3, wherein the alkyl substituted saturated hydrocarbon radical is 2,2,4-trimethylhexamethylene, 2,4,4-trimethylhexamethylene or a mixture of both.

5. An injection molding composition comprising a polyamide copolymer as claimed in any of Claims 1 to 4 and 10 to 60 per cent of glass fibers, glass beads, mineral fibers, graphite fibers or a mixture of these.

6. A composition according to Claim 5 comprising 20 to 50 per cent of glass fibers, glass beads, mineral fibers, graphite fibers or a mixture of these.

## Patentansprüche

1. Kristallines Polyamidcopolymerisat, im wesentlichen bestehend aus den folgenden wiederkehrenden Einheiten (A) und (C) und gegebenenfalls (B) 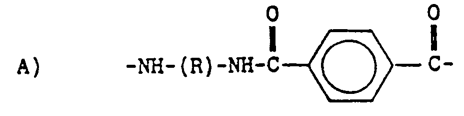 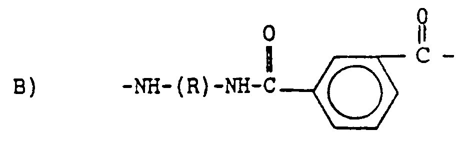 und 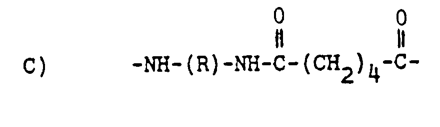 worin R ein Gemisch aus einem geradkettigen aliphatischen Kohlenwasserstoffrest mit sechs Kohlenstoffatomen und einer alkylsubstituierten gesättigten Kohlenwasserstoffkette mit einer Länge von sechs Kohlenstoffatomen ist, deren Alkylsubstitution aus drei Methylgruppen besteht, wobei sich zwei dieser drei Methylgruppen am gleichen Kohlenstoffatom befinden, und worin das Molverhältnis aus den geradkettigen aliphatischen Kohlenwasserstoffresten und den alkylsubstituierten gesättigten Kohlenwasserstoffresten von 55 : 45 bis 95 : 5 reicht und die Monomereinheiten (A), (B) und (C) in Molverhältnissen von ≥ 61 % Einheiten (A), ≤ 25 % Einheiten (B) und ≥ 5 % Einheiten (C) vorhanden sind.

2. Kristallines Polyamidcopolymerisat nach Anspruch 1, dadurch gekennzeichnet, daß es hauptsächlich aus wiederkehrenden Einheiten (A) und (C) besteht.

3. Kristallines Polyamidcopolymerisat nach Anspruch 1 oder 2, dadurch gekennzeichnet, daß das Molverhältnis aus den geradkettigen aliphatischen Kohlenwasserstoffresten und den alkylsubstituierten gesättigten Kohlenwasserstoffresten von 55 : 45 bis 80 : 20 reicht.

4. Kristallines Polyamidcopolymerisat nach irgendeinem der Ansprüche 1 bis 3, dadurch gekennzeichnet, daß die alkylsubstituierten gesättigten Kohlenwasserstoffreste 2,2,4-Trimethylhexamethylen, 2,4,4-Trimethylhexamethylen oder ein Gemisch aus beiden Resten sind.

5. Spritzgießmasse, dadurch gekennzeichnet, daß sie ein Polyamidcopolymerisat nach irgendeinem der Ansprüche 1 bis 4 und 10 bis 60 % Glasfasern, Glasperlen, Mineralfasern, Graphitfasern oder ein Gemisch hiervon enthält.

6. Masse nach Anspruch 5, dadurch gekennzeichnet, daß sie 20 bis 50 % Glasfasern, Glasperlen, Mineralfasern, Graphitfasern oder ein Gemisch hiervon enthält.

## Revendications

1. Un copolymère de polyamide cristallin constitué essentiellement des motifs récurrents A et C, et facultativement B, suivants : 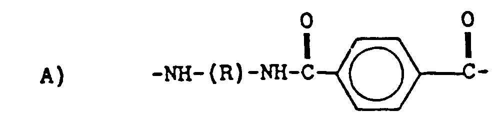 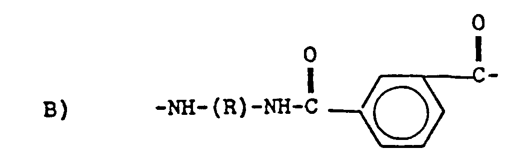 et 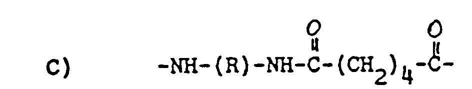 où R est un mélange d'un radical hydrocarboné aliphatique à chaîne droite constitué de 6 atomes de carbone et d'une chaîne hydrocarbyle saturée alcoyl-substituée longue de 6 atomes de carbone dont la substitution alcoyle est constituée de trois groupes méthyles, deux des trois groupes méthyles étant sur le même atome de carbone, où le rapport molaire du radical hydrocarboné aliphatique à chaîne droite au radical hydrocarboné saturé alcoyl-substitué est de 55/45 à 95/5 et où les proportions molaires des motifs A, B et C sont comme suit : ≥ 61 % de motifs A ; ≤ 25 % de motifs B et ≥ 5 % de motifs C.

2. Un copolymère de polyamide cristallin selon la revendication 1 constitué essentiellement des motifs A et C.

3. Un copolymère de polyamide selon la revendication 1 ou 2, dans lequel le rapport molaire du radical hydrocarboné aliphatique à chaîne droite au radical hydrocarboné saturé alcoyl-substitué est de 55/45 à 80/20.

4. Un copolymère de polyamide selon l'une quelconque des revendications 1 à 3, dans lequel le radical hydrocarboné saturé alcoyl-substitué est le 2,2,4-triméthylhexaméthylène, le 2,4,4-triméthyl-hexaméthylène ou un mélange des deux.

5. Une composition à mouler par injection comprenant un copolymère de polyamide selon l'une quelconque des revendications 1 à 4, ayant 10 à 60 % de fibres de verre, de perles de verre, de fibres minérales, de fibres de graphite ou d'un de leurs mélanges.

6. Composition selon la revendication 5, comprenant 20 à 50 % de fibres de verre, de perles de verre, de fibres minérales, de fibres de graphite ou d'un de leurs mélanges.
